# EUROPEAN PATENT APPLICATION

(11) **EP 3 309 510 A1**
(43) Date of publication of application: **18.04.2018**
(21) Application number: 16807677.6
(22) Date of filing: 01.04.2016
(51) Int. Cl.: G01C 5/00, G01C 15/00

(54) **HEIGHT-ADJUSTABLE LASER LEVEL APPARATUS**

(30) Priority: 09.06.2015 KR 20150081358
(71) Applicant: Jung, Min Shy, Gangneung-si, Gangwon-do 25517 (KR)
(72) Inventor: Jung, Min Shy, Gangneung-si, Gangwon-do 25517 (KR)
(74) Representative: BRP Renaud & Partner mbB Rechtsanwälte Patentanwälte Steuerberater
(86) International application number: PCT/KR2016/003388
(87) International publication number: WO 2016/200034

(57) **Abstract**

The present invention relates to a height-adjustable laser level apparatus, comprising: a laser-emitting part which emits laser light to indicate a vertical point at a measurement point; a case part into which the laser-emitting part is inserted and coupled to protect the laser-emitting part from external impact, and to maintain the horizontality of the laser level apparatus; and a height adjustment part which is inserted into and coupled with the upper portion of the case part to adjust the height of the laser level apparatus. The laser level apparatus is coupled with the upper portion of a scaffold or a temporary material at a construction site to maintain horizontality regardless of smoothness and horizontality level of an installation surface, thereby improving accuracy of measurement. Further, the laser level apparatus is coupled without any particular support, thereby improving portability. Also, the laser level apparatus allows height to be adjusted through a simple operation by the height control part. The laser level apparatus is coupled with the upper portion, and thus does not affect worker movement or work activities such as material transfer at the time of measurement, thereby improving workability.

## Description

### [Technical Field]

The present invention relates to a height-adjustable laser level apparatus which can be fastened to the upper part of a scaffold or a construction platform at a construction site without a separate stand, be kept level regardless of the smoothness and level of the installation surface, and be easily operated to adjust the height thereof.

### [Background Art]

Generally, when a finish line is marked on a wall surface or a floor surface to construct a finishing material such as tile or stone at a construction site, a vertical point is measured using a chalk thread or an inking string. However, such a measurement technique may produce an error depending on the gaze angle of the operator and the position of the operator's hand, and the finish line can be damaged by movement of the workers when used in a large space, resulting in deterioration in workability of the workers and completeness of the architectural space. Recently, a laser level apparatus using a laser beam is disposed at a position spaced a certain distance from a reference point to mark a finish line along a laser beam emitted from the laser level apparatus is used.

In this regard, Korean Patent Application No. 10-2008-0089087 discloses a horizontal level apparatus including first and second laser level apparatuses configured to emit a laser beam so as to measure the vertical point of an object and a tripod on which the first and second laser level apparatuses can be placed such that an operator can move the first and second laser level apparatuses to a desired height to efficiently measure the vertical point.

However, in the case of the above-mentioned conventional invention, there is a possibility that the measurement accuracy will be decreased when the bottom surface on which the tripod is mounted is not even, or when the bottom surface and the measurement surface are not orthogonal to each other. Further, the bulky tripod should always be carried to measure the vertical point, and thus has low portability. In addition, the tripod may fall due to external impact and thus the horizontal level apparatus may be broken in the process of movement of the operator or material transportation during the work or the measurement point may be changed unexpectedly, and thus may need to be re-measured, which causes inconvenience. In addition, since adjusting the height of the level apparatus requires manipulation of the tripod, work efficiency may be lowered.

In order to address the above-described issue, the present invention provides a height-adjustable laser level apparatus which can be fastened to the upper part of a scaffold or a construction platform without a separate support at a construction site and be kept level regardless of the smoothness and level of the installation surface, thereby improving measurement accuracy and portability.

The present invention also provides a height-adjustable laser level capable of facilitating height adjustment by a simple operation of a height adjuster and improving workability as the level apparatus is fastened to the upper part so as not to affect work activities such as worker movement and material transportation even when measurement is performed.

### [Disclosure]

### [Technical Problem]

Therefore, the present invention has been made in view of the above problems, and it is one object of the present invention to provide a height-adjustable laser level apparatus, which can be fastened to the upper part of a scaffold or a construction platform at a construction site without a separate support, and be kept level regardless of the smoothness and level of the installation surface, thereby improving measurement accuracy and portability.

It is another object of the present invention to provide a height-adjustable laser level apparatus capable of facilitating height adjustment by a simple operation of a height adjuster and improving workability as the level apparatus is fastened to the upper part so as not to affect work activities such as worker movement and material transportation even when measurement is performed.

### [Technical Solution]

In accordance with an aspect of the present invention, the above and other objects can be accomplished by the provision of:
a height-adjustable laser level apparatus including: a laser emission unit configured to emit a laser beam and display a vertical point at a measurement point; a case coupled with the laser emission unit inserted thereinto so as to protect the laser emission unit from external impact and configured to keep the laser level apparatus level; a height adjuster inserted into and coupled to an upper portion of the case to adjust a height of the laser level apparatus.

### [Advantageous Effects]

According to the present invention, a height-adjustable laser level apparatus can be fastened to an upper part of a scaffold or a construction platform at a construction site and be kept level regardless of the smoothness and level of the installation surface. Thereby, measurement accuracy can be improved. Further, as fastening can be performed without a separate support, portability of the level apparatus can be improved.

In addition, the height can be adjusted by a simple operation of the height adjuster. Further, since the level apparatus is fastened to the upper part, measurement operation can be performed without affecting work activities such as worker movement and material transportation. Therefore, workability can be maximized.

### [Description of Drawings]

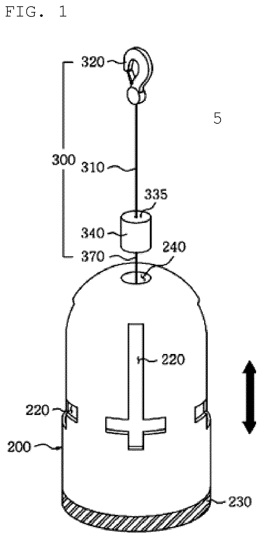

FIG. 1 is a view illustrating a height-adjustable laser level apparatus.

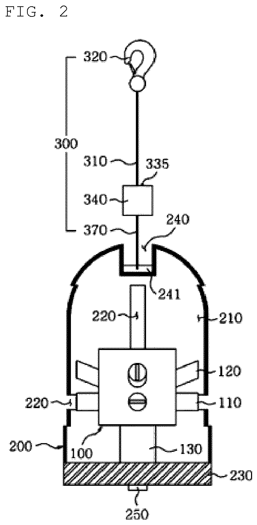

FIG. 2 is a cross-sectional view of the height-adjustable laser level apparatus.

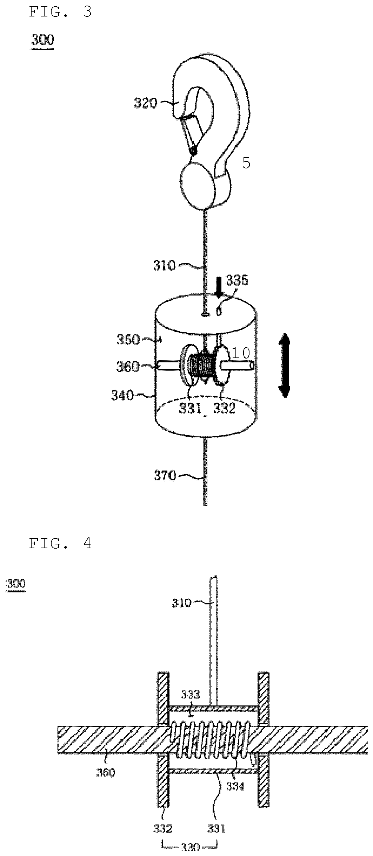

FIG. 3 is a detailed view of a height adjusting body of a height-adjustable laser level apparatus.
FIG. 4 is a detailed cross-sectional view of the height adjusting body of the height-adjustable laser level apparatus.

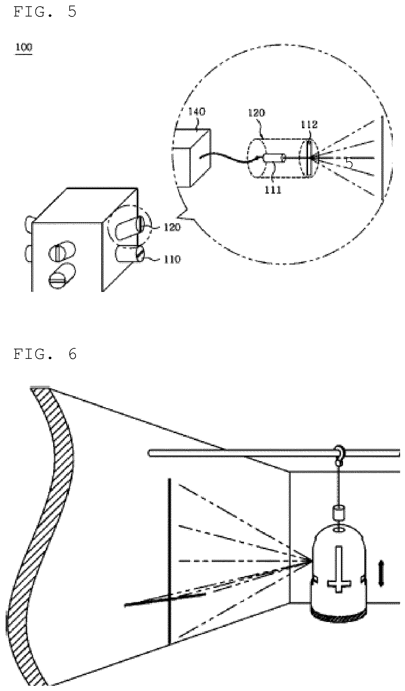

FIG. 5 is an exemplary view and a detailed view of a laser emission unit of the height-adjustable laser level apparatus.
FIG. 6 illustrates an embodiment of the height-adjustable laser level apparatus.

### [Best Mode]

Hereinafter, the present invention will be described in detail with reference to the accompanying drawings.

According to the present invention, a height-adjustable laser level apparatus includes a laser emission unit 100 configured to emit a laser beam and display a vertical point at a measurement point; a case 200 coupled with the laser emission unit 100 inserted thereinto so as to protect the laser emission unit 100 from external impact and configured to keep the laser level apparatus level; a height adjuster 300 inserted into and coupled to an upper portion of the case 200 to adjust a height of the laser level apparatus.

More specifically,
The laser emission unit 100 includes two or more horizontal emission units 110 or vertical emission units 120 formed in a cubic shape on each lateral face of the laser emission unit so as to display a horizontal line and a vertical line at a measurement point; a battery 130 coupled to the center of the bottom surface of the laser emission unit 100 and configured to supply power to the horizontal emission units 100 and the vertical emission units 120; and a control unit 140 provided in the laser emission unit 100 to control operation of the laser emission unit 100. The horizontal emission units 110 and the vertical emission units 120 are provided therein with a laser beam emission member 111 connected to the control unit 140 at one side thereof. Accordingly, the emitted laser light can be projected on a diffuser 112 formed on the side opposite to the laser beam emission member 111 and diffused into a line. Whether the emitted laser line is horizontal or vertical depends on the orientation of the diffuser 112.

The case 200 includes a case inner space 210 formed to allow the laser emission unit 100 to be inserted thereinto; a light transmission hole 220 punctured in a side surface thereof to allow the laser beam emitted from the horizontal emission units or the vertical emission units of the inserted laser emission unit 100 to be transmitted therethrough; a level maintenance member 230 provided on a bottom surface of the case 200 to keep the laser level apparatus level; a height adjuster insertion hole 240 formed at the upper end of the case 200 to allow the vertical movement part 340 to be inserted thereinto to facilitate storage of the vertical movement part 340 when the laser level apparatus is not in use; an operation switch 250 provided on the bottom surface of the level maintenance member 230 to supply or interrupt power to the control unit 140. When the laser emission unit 100 is inserted into the case inner space 210, the laser emission unit 100 is inserted into the center of the lower end of the case inner space 210. Accordingly, error of level which may be caused by the weight of the laser emission unit 100 can be prevented. Further, a magnetic member 241 is provided on the bottom surface of the height adjuster insertion hole 240, and accordingly attachment and detachment of the vertical movement part 340 can be facilitated.

The height adjuster 300 includes a height adjustment string 310 configured to adjust the height of the laser level apparatus by adjusting the length of the height adjustment string; a fastening hook 320 coupled to an upper end of the height adjustment string 310 to firmly fasten the laser level apparatus to a desired place; a rotation adjustment member 330 coupled to a lower end of the height adjustment string 310 to adjust the length of the height adjustment string 310 by rotating, the rotation adjustment member 330 including a constrainer 331 and a side plate 332 coupled to opposite ends of the constrainer; a support 360 arranged through the rotation adjustment member; a vertical movement part 340 having an inner space 350 allowing the rotation adjustment member 330 to be installed therein using the support; and a level maintenance connecting string 370 formed on the bottom surface of the vertical movement part 340 to connect the height adjuster 300 and the case 200 and configured to precisely keep the laser level apparatus level by preventing an error from being produced in keeping the laser level apparatus level according to an amount of constraint of the height adjustment string 310 when the height adjustment string 310 is constrained by rotation of the rotation adjustment member 330. The rotation adjustment member is installed in the inner space of the vertical movement part using the support. The rotation adjustment member is fixed to the inner space of the vertical movement part and is rotatable around the support.

In addition, the constrainer 331 of the rotation adjustment member 330 defines a constrainer inner space 333 therein, and an elastic member 334 is arranged in the constrainer inner space and is coupled to the support 360 at one side thereof and fixedly coupled to the inner wall of the constrainer inner space at the opposite side. The rotation adjustment member 330 can be rotated, by the resilient force of the elastic member 334 fixedly coupled to the support and the inner wall of the constrainer inner space, to constrain the height adjustment string 310. In addition, a fixing pin 335 is arranged through the upper surface of the vertical movement part 340 and is fastened to one of the side plates 332, which are formed in a gear shape, of the rotation adjustment member 330. Thereby, the height adjustment string 310 can be fixed such that the height of the laser level apparatus is adjusted.

### Reference Numerals

100: Laser emission unit
110: Horizontal emission unit
120: Vertical emission unit
130: Battery
140: Control unit
111: Laser light emission member
112: Diffuser
200: Case
210: Case inner space
220: Light transmission hole
230: Level maintenance member
240: Height adjuster insertion hole
241: Magnetic member
250: Operation switch
300: Height adjuster
310: Height adjustment string
320: Fastening hook
330: Rotation adjustment member
331: Constrainer
332: Side plate
333: Constrainer inner space
334: Elastic member
335: Fixing pin
340: Vertical movement part
350: Inner space
360: Support
370: Level maintenance connecting string

## Claims

1. A height-adjustable laser level apparatus comprising: a laser emission unit; a case provided therein with the laser emission unit; a height adjuster configured to adjust a height of the case provided with the laser emission unit,
wherein the case comprises a case inner space; and a light transmission hole,
wherein the laser emission unit is arranged in the case inner space and comprises:
a control unit driven by a battery and operated using an operation switch;
two or more horizontal emission units or vertical emission units arranged on a side surface of the laser emission unit and provided therein with a laser emission member configured to receive a signal from the control unit and emit a laser beam; and
a diffuser configured to defuse the laser beam along a horizontal line or a vertical line when the laser beam is projected onto the diffuser,
wherein the height adjuster comprises:
a height adjustment string configured to adjust a height of the laser level apparatus through adjustment of a length of the height adjustment string;
a fastening hook coupled to an upper end of the height adjustment string to securely fasten the laser level apparatus to a desired place;
a rotation adjustment member coupled to a lower end of the height adjustment string to adjust a length of the height adjustment string by rotating, the rotation adjustment member comprising a constrainer and a side plate coupled to oppsite ends of the constrainer;
a support installed through the rotation adjustment member;
a vertical movement part provided with an inner space allowing the rotation adjustment member to be installed therein using the support; and
a level maintenance connecting string formed on a bottom surface of the vertical movement part to maintain the height adjuster and the case and configured to precisely keep the laser level apparatus level by preventing an error from being produced in keeping the laser level apparatus level according to an amount of constraint of the height adjustment string when the height adjustment string is constrained by rotation of the rotation adjustment member,
wherein accurate measurement is ensured by precisely keeping the level apparatus level.

2. The height-adjustable laser level apparatus according to claim 1, further comprising:
a level maintenance member provided on a bottom surface of the case.

3. The height-adjustable laser level apparatus according to claim 1, wherein one of the side plates of the rotation adjustment member is formed in a gear shape,
the height-adjustable laser level apparatus further comprising:
a constrainer inner space defined in the constrainer of the rotation adjustment member;
an elastic member arranged in the constrainer inner space and having one side coupled to the support and an opposite side fixedly coupled to an inner wall of the constrainer inner space; and
a fixing pin arranged through an upper surface of the vertical movement part to fix the gear-shaped side plate
wherein a length of the height adjustment string is fixed.

4. The height-adjustable laser level apparatus according to claim 1, further comprising:
a height adjuster insertion hole formed in an upper portion of the case to allow the vertical movement part to be inserted thereinto and stored; and
a magnetic member provided on a bottom surface of the height adjuster insertion hole.
